# FASCICULE DE BREVET EUROPEEN

(11) **EP 0 338 923 B1**
(45) Date de publication et mention de la délivrance du brevet: **03.02.1993**
(21) Numéro de dépôt: 89401089.1
(22) Date de dépôt: 19.04.1989
(51) Int. Cl.: B62D 25/08

(54) **Structure avant de véhicule**
Vorderteil eines Fahrzeuges
Front part of a vehicle

(30) Priorité: 22.04.1988 FR 8805829
(43) Date de publication de la demande: 25.10.1989
(73) Titulaire: AUTOMOBILES PEUGEOT, 75116 Paris (FR); AUTOMOBILES CITROEN, 92200 Neuilly-sur-Seine (FR)
(72) Inventeur: Druhen Charnaux, Yves, F-78530 Buc (FR)
(74) Mandataire: Boivin, Claude

(56) Documents cités:
- EP-A- 0 141 959
- DE-A- 3 119 572
- FR-A- 2 541 958

## Description

Le montage d'un poste de conduite dans une structure de voiture traditionnelle est une opération longue et compliquée, rendue plus pénible encore par la mauvaise accessibilité des fixations des équipements que l'on monte. On connaît des tabliers sur lesquels sont fixées des couches de matériaux d'isolation phonique et des équipements. Mais cette solution entraîne la superposition de parois, donc l'inconvénient d'être coûteuse sans présenter d'intérêt réel et de compliquer le montage.

La présente invention a pour objet une structure avant de véhicule qui est de montage facile et assure une bonne isolation phonique de l'habitacle du véhicule.

Le document EP-A-0 141 959 décrit une structure avant de véhicule qui comporte une traverse en tôle destinée à relier les pieds avant du véhicule et sur laquelle un support de colonne de direction et de pédalier est fixé perpendiculairement, et un tablier destiné à séparer le compartiment moteur de l'habitacle, constitué d'un élément intérieur situé côté habitacle et d'un élément extérieur et fixé à la traverse et au support.

La structure avant selon l'invention est caractérisée en ce que ledit support est fixé sur la traverse par soudage et en ce que lesdits éléments sont en un matériau composite multicouches d'isolation phonique et collés l'un à l'autre par certaines zones intermédiaires et par leur périphérie de manière à former des corps creux. D'autres caractéristiques de la structure sont décrites dans les revendications 2 à 9.

On a décrit ci-après, à titre d'exemple non limitatif, un mode de réalisation de la structure selon l'invention, avec référence aux dessins annexés dans lesquels :

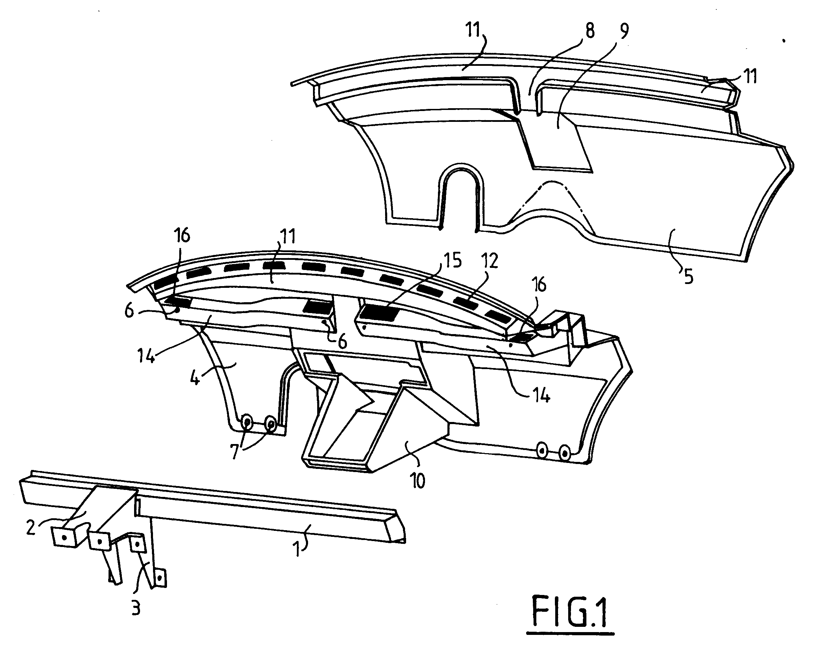

La Figure 1 est une vue en perspective de la structure, ses éléments constitutifs étant représentés séparés;

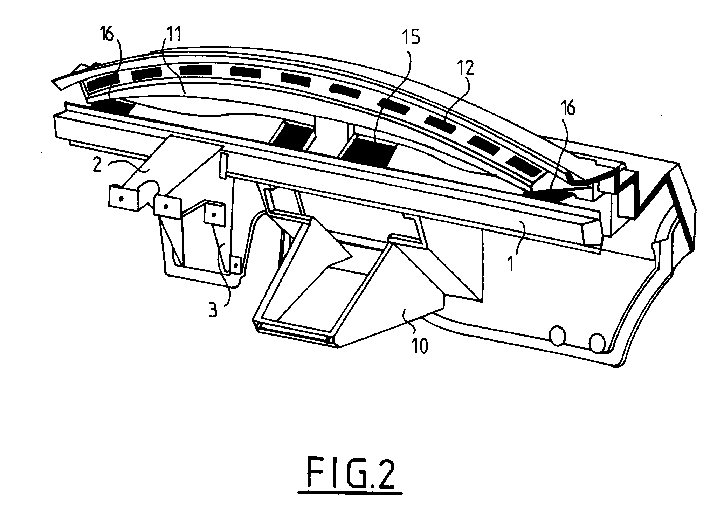

La Figure 2 est une vue semblable à la Figure 1, les divers éléments de la structure étant assemblés entre eux;

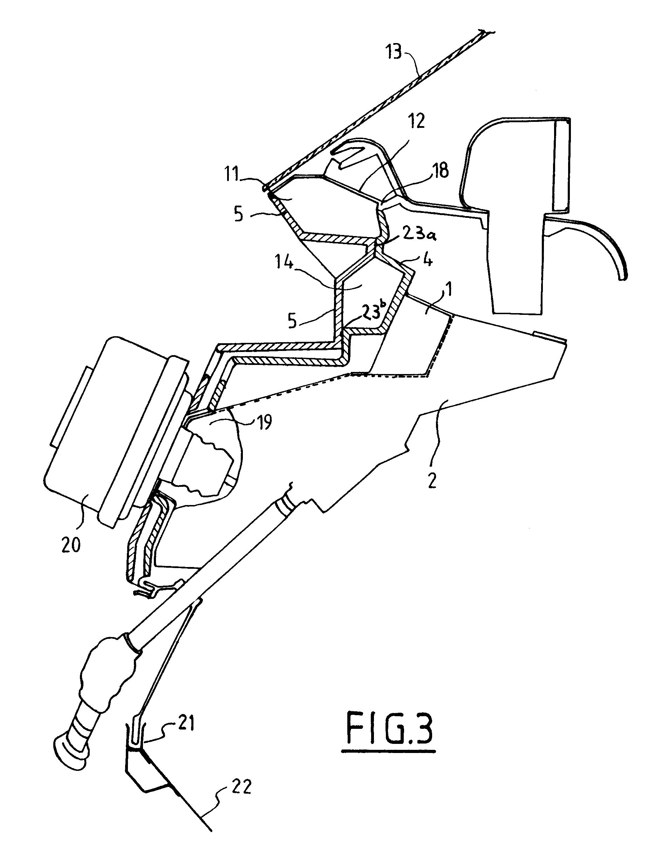

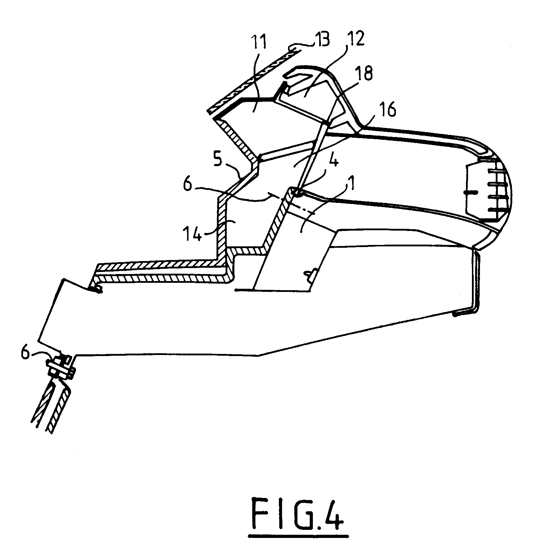

Les Figures 3 et 4 sont des vues en coupe verticale de la structure.

Telle qu'elle est réprésentée aux dessins, la structure avant selon l'invention comporte une traverse 1 en tôle destinée à relier les pieds avant du véhicule. Elle est constituée par un profilé sur lequel a été soudé perpendiculairement un support de colonne de direction 2 s'étendant en dessous de la traverse de façon à constituer un support de pédalier 3. Un tablier, destiné à séparer le compartiment moteur de l'habitacle et formé d'un élément intérieur 4 et d'un élément extérieur 5, est fixé à la traverse 1 par des vis 6 et au support 2 par des vis 7.

Les deux éléments 4 et 5 sont en un matériau composite multicouches d'isolation phonique et collés l'un à l'autre par certaines zones et par leur périphérie. Ils délimitent un conduit central 8 dont la partie inférieure communique par l'intermédiaire d'une ouverture 9 avec un bloc de climatisation monté sur l'élément 4 au niveau de cette ouverture. A cet effet, l'élément 4 comporte un support 10 dans lequel viendront se loger l'aérotherme et l'évaporateur du climatiseur. A sa partie supérieure, le conduit 8 communique avec des conduits latéraux 11 délimités en partie par l'élément 4 et en partie par l'élément 5; des ouvertures 12 ménagées dans l'élément 4 assurent la distribution de l'air de dégivrage sur le pare-brise 13. Ce dernier est collé sur une face de l'élément 5, au niveau du conduit. Dans l'ouverture 9 débouchent également des conduits latéraux 14 ménagés dans l'élément intérieur 4 et fermés par l'élément extérieur 5. Ces conduits latéraux communiquent avec les aérateurs centraux 15 et avec les aérateurs latéraux 16 de la planche de bord. Celle-ci peut être constituée par une simple peau collée par des languettes 18 prévues sur les bords supérieurs de chacun des éléments 4 et 5.

Les deux éléments 4 et 5 présentent, au niveau du support 2-3 une zone où ils sont collés l'un à l'autre et qui est munie d'une ouverture 19 pour le passage de la commande du servo-moteur de frein 20. Les bords inférieur et latéraux du tablier, formés par les pourtours collés des deux éléments 4 et 5 sont fixés par collage dans une rainure 21 de la caisse 22.

On voit de la description qui précède que la structure avant selon l'invention présente de nombreux avantages :
- elle intègre dans le tablier des fonctions accessoires, ce qui diminue le nombre de pièces à monter et simplifie le montage;
- la matière du tablier permet de traiter acoustiquement les conduits d'air, donc de diminuer le niveau du bruit à l'intérieur du véhicule;
- la planche de bord, dépourvue des conduits d'air, peut être une simple peau dont le style peut être modifié facilement;
- elle ne nécessite pas la pose de pièces d'insonorisation complémentaire.

## Revendications

1. Structure avant de véhicule destinée à être préassemblée avant son montage sur la caisse du véhicule, comportant une traverse (1) en tôle destinée à relier les pieds avant du véhicule et sur laquelle un support (2, 3) de colonne de direction et de pédalier est fixé perpendiculairement, et un tablier destiné à séparer le compartiment moteur de l'habitacle, constitué d'un élément intérieur (4) situé côté habitacle et d'un élément extérieur (5) et fixé à la traverse (1) et au support (2, 3),
caractérisée en ce que ledit support (2, 3) est fixé sur la traverse (1) par soudage et en ce que lesdits éléments (4, 5) sont en un matériau composite multicouches d'isolation phonique et collés l'un à l'autre par certaines zones intermédiaires (23a, 23b) et par leur périphérie de manière à former des corps creux (8, 11, 14).

2. Structure avant selon la revendication 1,
caractérisée en ce que les deux éléments (4 et 5) délimitent un conduit central (8) dont la partie inférieure débouche dans une ouverture (9) au niveau d'un bloc de commande climatiseur et dont la partie supérieure communique avec des conduits latéraux (11) présentant des ouvertures (12) sur leur face orientée vers le pare-brise (13).

3. Structure avant selon la revendication 2,
caractérisée en ce que l'élément (4) situé du côté de l'habitacle présente deux conduits latéraux (14) fermés par l'élément situé du côté du compartiment moteur, débouchant dans l'ouverture (9) et présentant des ouvertures (15-16) permettant de distribuer l'air vers les aérateurs centraux et latéraux de la planche de bord.

4. Structure avant selon l'une des revendications 1 à 3,
caractérisée en ce que l'élément (4) situé du côté de l'habitacle comporte un support (10) pour l'équipement de chauffage.

5. Structure avant selon l'une des revendications précédentes,
caractérisée en ce que les deux éléments (4 et 5) présentent au niveau du support (2-3) pédalier/colonne de direction une zone où ils sont collés et qui est munie d'une ouverture (19) pour le passage de la commande du servo-moteur de frein (20).

6. Structure avant selon l'une des revendications précédentes,
caractérisée en ce que l'élément (4) situé du côté de l'habitacle présente des trous dans lesquels sont engagés les moyens de fixation (6 et 7) du tablier sur la traverse (1) et sur le support (2-3).

7. Structure avant selon l'une des revendications précédentes,
caractérisée en ce que les bords inférieur et latéraux du tablier, formés par les pourtours collés des deux éléments (4 et 5) sont fixés par collage dans une rainure (21) de la caisse (22).

8. Structure avant selon l'une des revendications précédentes,
caractérisée en ce que l'élément (5) situé du côté du moteur présente une portion sur laquelle le pare-brise (13) peut être collé.

9. Structure avant selon l'une des revendications précédentes,
caractérisée en ce que chacun des deux éléments (4 et 5) présente sur ses bords supérieurs une languette sur laquelle la planche de bord peut être collée.

## Patentansprüche

1. Vorderteil eines Kraftfahrzeuges zum Zusammenbau vor dessen Einbau in die Karosserie eines Kraftfahrzeuges, bestehend aus einer Querstrebe (1) aus Blech zum Verbinden der vorderen Fußenden des Kraftfahrzeuges, an der senkrecht eine Halterung (2, 3) für die Lenksäule und für das Pedalgestänge berfestigt ist, und einer Stirnwand zur Trennung zwischen Motorgehäuse und Karosseriegehäuse, die aus einem Innenteil (4) und einem Außenteil (5) besteht und an der Querstrebe (1) und an der Halterung (2,3) befestigt ist,
**dadurch gekennzeichnet,** daß die o.a. Halterung (2, 3) durch Verschweißen an der Querstrebe (1) befestigt ist und die o.a. Teile (4, 5) aus einem mehrschichtigen Material mit schalldämmendender Wirkung bestehen, wobei die verschiedenen Schichten an mehreren Zwischenbereichen (23a, 23b) sowie an den Randbereichen zusammengeklebt sind, sodaß dadurch Hohlräume (8, 11, 14) gebildet werden.

2. Vorderteil nach Patentanspruch 1, dadurch gekennzeichnet, daß durch die beiden Teile (4, 5) eine zentraler Luftkanal (8) gebildet wird, dessen Unterteil in Höhe eines Klimageräte-Steuerblocks in eine Öffnung (9) mündet und dessen Oberteil mit Seitenkanälen (11) verbunden ist, welche auf der der Windschutzscheibe (13) zugewandten Seite Öffnungen (12) besitzen.

3. Vorderteil nach Patentanspruch 2, dadurch gekennzeichnet, daß das zum Karosseriegehäuse hin gelegene Innenteil (4) zwei Seitenkanäle (14) aufweist, die durch das zum Motorgehäuse hin gelegene Außenteil (5) geschlossen werden und in die Öffnung (9) münden sowie Öffnungen (15, 16) aufweisen, durch die Luft zu den zentralen und seitlichen Belüftern des Armaturenbrettes geleitet werden kann.

4. Vorderteil nach einem der Patentansprüche 1 bis 3, dadurch gekennzeichnet, daß das zum Karosseriegehäuse gelegene Innenteil (4) eine Halterung (10) für die Heizungsausrüstung besitzt.

5. Vorderteil nach einem der vorhergehenden Patentansprüche, dadurch gekennzeichnet, daß die beiden Teile (4) und (5) in Höhe der Halterung (2, 3) für Pedalgestänge und Lenksäule einen Bereich besitzen, in dem sie miteinander verklebt sind und in der eine Öffnung (19) zum Durchführen der Bremsen-Servomotorsteuerung (20) vorgesehen ist.

6. Vorderteil nach einem dar vorhergehenden Patentansprüche, dadurch gekennzeichnet, daß das zum Karosseriegehäuse hin gelegene Innenteil (4) Löcher aufweist, durch die Mittel (6, 7) zum Befestigen der Stirnwand an der Querstrebe (1) und an der Halterung (2, 3) geführt werden können.

7. Vorderteil nach einem der vorhergehenden Patentansprüche, dadurch gekennzeichnet, daß die aus der verklebten Umrandung der beiden Teile (4, 5) gebildeten Unter- und Seitenränder der Stirnwand durch Verkleben in einer Hohlkehle (21) der Karosserie (22) befestigt werden.

8. Vorderteil nach einem der vorhergehenden Patentansprüche, dadurch gekennzeichnet, daß das zum Motorgehäuse hin gelegene Außenteil (5) einen Bereich aufweist, auf dem die Windschutzscheibe (13) angeklebt werden kann.

9. Vorderteil nach einem der vorhergehenden Patentansprüche, dadurch gekennzeichnet, daß jedes der beiden Teile (4, 5) an der Oberkante eine Zunge besitzt, auf der das Armaturenbrett angeklebt werden kann.

## Claims

1. Front part of a vehicle and intended to be preassembled prior to it being mounted on the body of the vehicle and comprising one sheet metal crossmember (1) for linking the front feet of the vehicle and fixed perpendicularly to a toe board and steering column, and one dash panel intended to separate the engine compartment from the passenger compartment and constituted by one internal element (4) situated on the passenger compartment side and one external element (5) and fixed to the crossmember (1) and the support (2, 3),
wherein said support (2, 3) is secured by weld to the crossmember (1) and wherein said elements (4, 5) are made of a sound insulation multilayer composite material and glued to each other via certain intermediate zones (23a, 23b) and their periphery so as to form hollow bodies (8, 11, 14).

2. Front part according to claim 1,
wherein the two elements (4 and 5) delimit one central pipe (8) whose lower portion opens into an opening (9) at the level of an air-conditioning control unit and whose upper portion communicates with lateral pipes (11) having openings (12) on their face directed towards the windscreen (13).

3. Front part according to claim 2,
wherein the element (4) situated on the side of the passenger compartment has two lateral pipes (14) closed by the element situated on the side of the engine compartment and opening into the opening (9) and having openings (15-16) enabling air to be distributed towards the central and lateral ventilators of the instrument panel.

4. Front part according to any one of claims 1 to 3,
wherein the element (4) situated on the passenger compartment side comprises a support (10) for the heating equipment.

5. Front part according to any one of the preceding claims,
wherein the two elements (4 and 5) have at the level of the toe board/steering column support (2-3) one zone where they are glued together and which is provided with an opening (19) for passage of the command of the brake servomotor (20).

6. Front part according to any one of the preceding claims,
wherein the element (4) situated on the passenger compartment side has holes able to engage the fixing means (6 and 7) of the instrument panel on the crossmember (1) and the support (2-3).

7. Front part according to any one of the preceding claims,
wherein the lower and lateral edges of the dash panel formed by the glued peripheries of the two elements (command 5) are fixed by glueing in a groove (21) of the body (22).

8. Front part according to any one of the preceding claims,
wherein the element (5) situated on the engine side has one portion to which the windscreen (13) is able to be glued.

9. Front part according to any one of the preceding claims,
wherein each of the two elements (4 and 5) has on its upper edges a tongue or lug to which the instrument panel can be glued.
